# FASCICULE DE BREVET EUROPEEN

(11) **EP 1 640 446 B1**
(45) Date de publication et mention de la délivrance du brevet: **20.11.2013**
(21) Numéro de dépôt: 05292004.8
(22) Date de dépôt: 27.09.2005
(51) Int. Cl.: C12M 1/10, C05F 17/02

(54) **Installation pour la fermentation aerobie de dechets**
Anlage zur aeroben Fermentierung von Abfällen
Installation for aerobic fermentation of waste

(30) Priorité: 27.09.2004 FR 0452165
(43) Date de publication de la demande: 29.03.2006
(73) Titulaire: Vinci Environnement, 92500 Rueil Malmaison (FR)
(72) Inventeur: Felidj, Karim, 92300 Levallois (FR); Seutin, Hugues, 78150 Le Chesnay (FR)
(74) Mandataire: Novagraaf Technologies

(56) Documents cités:
- FR-A- 2 746 410
- DATABASE WPI Section PQ, Week 199802 Derwent Publications Ltd., London, GB; Class Q35, AN 1998-014211 XP002333519 & JP 09 278131 A (NIPPON STEEL CORP) 28 octobre 1997 (1997-10-28)

## Description

L'invention concerne une installation pour la fermentation aérobie de déchets.

L'invention se rapporte plus particulièrement à une installation du type comprenant un tambour sensiblement cylindrique, rotatif, dans lequel les déchets fermentent sous l'action de micro-organismes aérobies, un dispositif de ventilation étant prévu à cet effet pour créer une circulation d'air à l'intérieur du tambour.

On connaît déjà de telles installations, notamment du document FR 2 746 410.

Le tambour décrit dans ce document est entraîné en rotation autour de son axe par un système d'entraînement comprenant d'une part une couronne dentée solidaire du tambour et d'autre part un pignon denté, d'axe sensiblement parallèle à l'axe du tambour, entraîné en rotation autour de son axe, et destiné à être en prise avec la couronne. Le seul degré de liberté du pignon correspond au mouvement de rotation autour de son axe.

De tels systèmes d'entraînement en rotation ne sont pas pleinement satisfaisants.

Tout d'abord, compte tenu de la grande dimension du tambour, il est difficile de réaliser un alignement parfait des axes de la couronne du tambour et du pignon. De ce fait, les dents de la couronne et du pignon ne sont généralement pas parfaitement engrenées, le système d'entraînement n'étant donc pas optimal.

En outre, la fermentation des déchets produit de la chaleur conduisant à une dilatation notable du tambour, radialement et/ou axialement. En conséquence, d'une part, le risque que les dents de la couronne ne soient pas bien en prise avec les dents du pignon est augmenté. D'autre part, cela engendre des contraintes importantes au sein du système d'entraînement, ce qui nuit à sa performance et à sa durée de vie.

Ces problèmes sont encore amplifiés dans le cas où le système de ventilation du tambour est particulièrement efficace. En effet, dans ce cas, la circulation d'air à l'intérieur du tambour est améliorée, ce qui favorise l'activité des micro-organismes de la fermentation et donc l'augmentation de la température du tambour.

En particulier, la demanderesse a constaté que, dans le cas où le dispositif de ventilation permet une circulation d'air à l'intérieur du tambour sensiblement axialement de l'extrémité aval à l'extrémité amont, l'activité de fermentation est considérablement augmentée. Les systèmes d'entraînement connus ne sont alors plus du tout appropriés, et il est nécessaire de concevoir et de mettre en oeuvre d'autres systèmes adaptés à d'importants phénomènes de dilatation.

L'invention a pour but de résoudre ces problèmes.

A cet effet, l'invention concerne une installation pour la fermentation aérobie de déchets, comprenant :
- un tambour comportant :

- une enveloppe dans laquelle les déchets à traiter sont destinés à être introduits, ladite enveloppe présentant un axe nominal sensiblement horizontal ou légèrement incliné par rapport à l'horizontale, une extrémité amont et une extrémité aval ;
- un bouclier de sortie comprenant une paroi transversale disposée en regard de l'extrémité aval de l'enveloppe ;
- un dispositif de ventilation permettant la circulation d'air à l'intérieur du tambour ;
- au moins un système d'entraînement, comportant un pignon entraîné en rotation autour d'un axe principal sensiblement parallèle à l'axe nominal du tambour et une couronne dentée solidaire du tambour, ledit pignon étant disposé de sorte à venir engrener la couronne pour commander la rotation du tambour autour de son axe nominal.

Selon une définition générale de l'invention, le pignon est en outre monté mobile par rapport à un premier axe de flottement distinct de l'axe principal du pignon, ledit montage étant agencé pour permettre au moins la rotation libre du pignon autour dudit premier axe de flottement.

Le pignon peut en outre être monté mobile par rapport à un deuxième axe de flottement distinct de l'axe principal du pignon et du premier axe de flottement, ledit montage étant agencé pour permettre au moins la rotation libre du pignon autour dudit deuxième axe de flottement.

Par exemple, au moins un axe de flottement est sensiblement parallèle à l'axe principal du pignon. Au moins un axe de flottement peut être sensiblement orthogonal à l'axe principal du pignon.

Selon une réalisation possible, le premier axe est sensiblement parallèle à l'axe principal du pignon et le deuxième axe est sensiblement horizontal et orthogonal à l'axe principal du pignon.

Le système d'entraînement en rotation du tambour peut comprendre un moteur associé au pignon via un dispositif réducteur et un dispositif de liaison, ledit dispositif de liaison étant agencé pour permettre la rotation du pignon autour du premier et/ou du deuxième axe de flottement. Par exemple, le dispositif de liaison comprend au moins un cardan et des moyens agencés pour permettre un coulissement du pignon sensiblement parallèlement à l'axe principal du pignon.

Le pignon peut être logé dans un carter fixé au sol par l'intermédiaire d'une barre sensiblement verticale dont l'extrémité inférieure est associée au sol de façon rotative autour du premier axe de flottement, et dont l'extrémité supérieure est associée au carter de façon rotative autour du deuxième axe de flottement.

Le système d'entraînement en rotation peut en outre comprendre un galet associé au pignon et disposé de sorte que la couronne soit intercalée entre ledit galet et le pignon.

Au moins un dispositif de guidage en rotation du tambour peut être prévu, ledit dispositif comprenant au moins un dispositif de support du tambour et au moins un organe de maintien prévu sur le tambour pour coopérer avec ledit dispositif de support.

Selon une réalisation possible, la paroi transversale du bouclier de sortie comprend une trappe apte à permettre l'évacuation des déchets fermentés et au moins un orifice de ventilation distinct de la trappe, ledit orifice étant disposé de sorte à permettre une circulation axiale d'air à travers lui, entre l'intérieur et l'extérieur de l'enveloppe.

L'installation comprend par exemple un dispositif d'obturation de l'orifice de ventilation, ledit dispositif étant agencé pour pouvoir être déplacé entre une position de fermeture, dans laquelle l'orifice de ventilation est obturé, et une position d'ouverture, dans laquelle l'orifice de ventilation est dégagé, ledit dispositif étant maintenu dans sa position de fermeture par des moyens de rappel et apte à être déplacé vers sa position d'ouverture sous l'action d'une force d'appui exercée à l'encontre de la force des moyens de rappel.

Selon une réalisation possible, le dispositif de ventilation comprend au moins un ventilateur relié à l'extrémité amont de l'enveloppe du tambour, ledit ventilateur étant agencé pour aspirer et/ou refouler l'air, de sorte que l'air soit introduit, respectivement évacué, au niveau de l'extrémité aval de l'enveloppe de façon sensiblement axiale à travers l'orifice de ventilation.

Les autres caractéristiques de l'invention résultent de la description qui suit d'un mode de réalisation, description effectuée en référence aux figures annexées dans lesquelles :
- la figure 1 est une représentation schématique partielle d'une installation pour la fermentation aérobie de déchets comprenant un tambour selon l'invention ;
- la figure 2 est une vue schématique en élévation du bouclier de sortie du tambour de la figure 1 ;
- la figure 3 est une vue en coupe selon un plan axial vertical du tambour de la figure 1, dans la zone du dispositif amont de guidage en rotation ;
- la figure 4 est une vue partielle en coupe du tambour selon la ligne AA de la figure 1 ;
- la figure 5 est une représentation schématique en coupe du tambour selon la ligne BB de la figure 1 ;
- la figure 6 est une vue similaire à celle de la figure 5, illustrant plus spécifiquement le système d'entraînement en rotation ;
- la figure 7 est vue similaire à celle de la figure 6, représentant de façon schématique la position des éléments constitutifs du système d'entraînement en rotation après une déformation radiale du tambour.

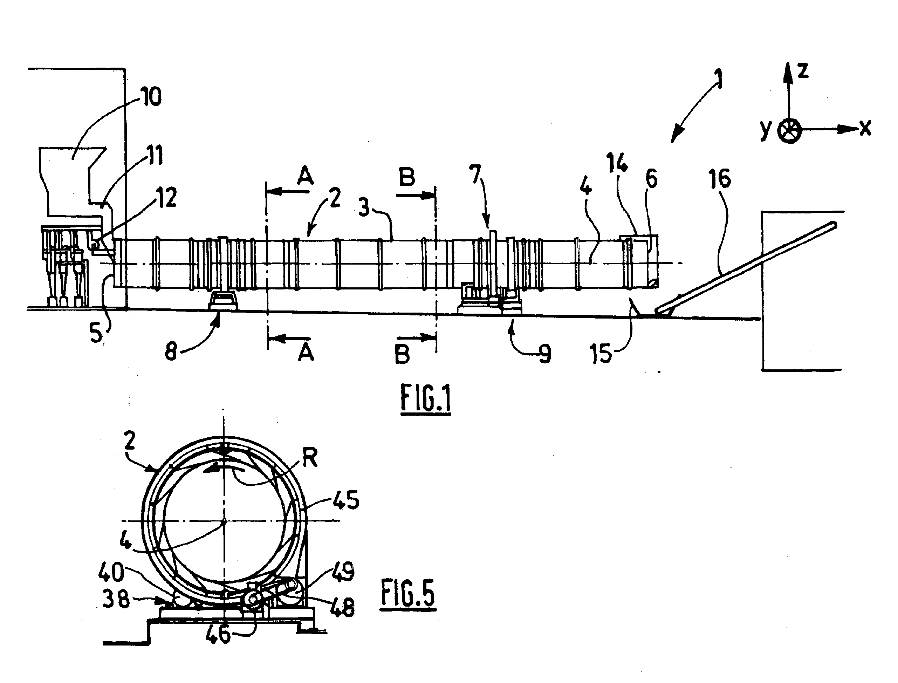

On se réfère tout d'abord à la figure 1 qui représente une installation 1 pour la fermentation aérobie de déchets.

L'installation 1 comprend tout d'abord un tambour 2, lui-même comportant une enveloppe 3 sensiblement cylindrique, d'axe nominal 4, ainsi qu'un bouclier d'entrée comprenant une paroi transversale amont 5, et un bouclier de sortie comprenant une paroi transversale aval 6, les parois transversales étant sensiblement en forme de disque. L'enveloppe 3 est réalisée en métal. Elle peut atteindre 40 à 50 m de longueur, et son diamètre peut être de l'ordre de 3 à 5 m.

Une localisation éloignée de l'axe 4 sera dite « extérieure », par opposition à une localisation plus proche de l'axe 4, dite « intérieure ». On définit l'axe X comme l'axe parallèle à l'axe nominal 4, orienté vers l'aval, l'axe Z comme l'axe vertical ascendant, et l'axe Y tel que (X, Y, Z) forme un repère orthogonal.

Le tambour 2 est disposé sur le sol de sorte que son axe 4 soit sensiblement horizontal, ou légèrement incliné par rapport à l'horizontale, de la paroi transversale amont 5 vers la paroi transversale aval 6, d'un angle inférieur à 10°, voire inférieur à 5°.

L'installation 1 comprend en outre un système d'entraînement 7 en rotation du tambour 2 autour de l'axe 4, disposé environ aux deux tiers de l'enveloppe 3 à partir de la paroi transversale amont 5. Le sens de rotation est indiqué sur les figures par les flèches R. Deux dispositifs de guidage en rotation, respectivement amont 8 et aval 9 sont également prévus.

L'installation 1 comprend des moyens de chargement des déchets à traiter, reliés à l'extrémité amont de l'enveloppe 3 du tambour 2. Ces moyens comportent une trémie de chargement 10, ainsi qu'un conduit 11 d'amenée des déchets depuis la trémie 10 vers l'intérieur du tambour 2, via un orifice ménagé dans la paroi transversale amont 5.

En entrée du tambour est également prévu un ventilateur 12, connecté à l'orifice de la paroi transversale amont 5 par lequel les déchets sont introduits, le ventilateur 12 étant apte à provoquer une circulation d'air à l'intérieur du tambour 2, comme on le verra plus loin.

Une masse déterminée de déchets est introduite à des moments choisis dans le tambour 2, via la paroi transversale amont 5. Pendant cette phase de chargement, le ventilateur 12 n'est pas en fonctionnement.

Les déchets sont brassés du fait du mouvement de rotation du tambour 2, et déplacés vers le bouclier de sortie, notamment par la poussée des nouveaux déchets introduits dans le tambour 2. Des couteaux peuvent être prévus à l'intérieur de l'enveloppe 3 pour favoriser le brassage et la séparation des déchets.

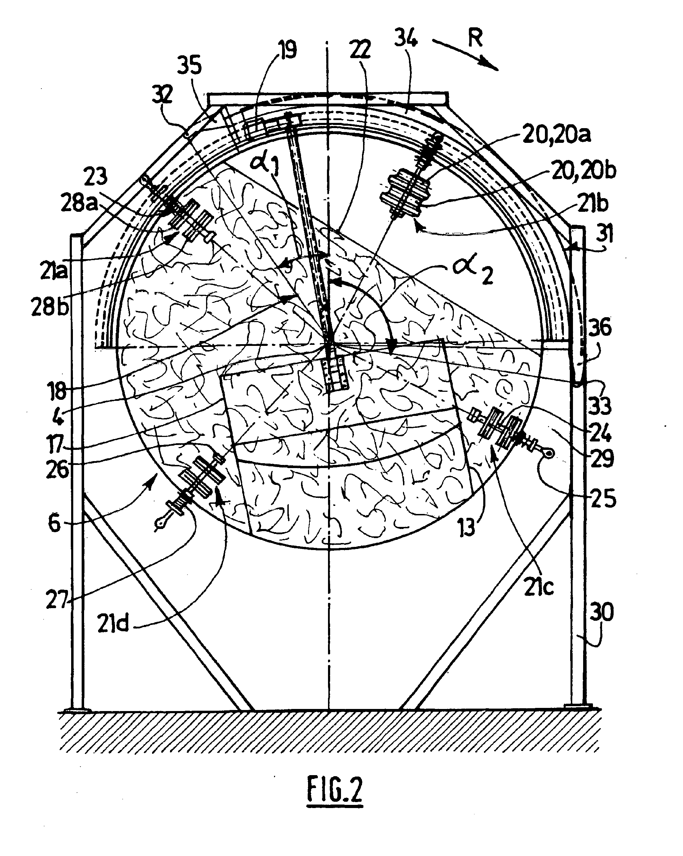

Pendant leur séjour dans le tambour, d'environ 2 à 3 jours, les déchets sont progressivement fermentés par des micro-organismes aérobies dont l'activité est augmentée par une circulation d'air appropriée. Les déchets présents dans le tambour 2 occupent par exemple les deux tiers du volume du tambour. Du fait de la rotation du tambour 2, les déchets forment en moyenne une surface libre 22 inclinée par rapport à l'horizontale (voir figure 2). Dans la réalisation représentée, la surface libre 22 est inclinée d'un angle voisin de 45°. Bien entendu, cet angle dépend notamment de la nature des déchets et de la vitesse de rotation du tambour 2.

La paroi transversale aval 6 comporte une trappe 13 permettant l'évacuation des déchets ainsi fermentés. En sortie, ces déchets se présentent sous forme d'amas de taille relativement importante. Afin de réduire la taille de ces amas, une pièce cylindrique 14 solidaire du tambour 2 est prévue. Cette pièce 14, ouverte à ses extrémités amont et aval, présente une surface latérale cylindrique munie d'orifices, de sorte à former un crible.

Enfin, l'installation 1 comprend des moyens d'évacuation des déchets fermentés, situés en aval du tambour 2. Ces moyens comprennent par exemple une trémie 15 de récupération et un transporteur à bande 16 apte à acheminer les déchets vers une autre unité.

On décrit maintenant la paroi transversale aval 6 du bouclier de sortie du tambour 2, en référence à la figure 2.

La trappe 13 d'évacuation des déchets fermentés est située dans la zone périphérique de la paroi transversale 6 du bouclier de sortie. Dans la réalisation représentée, la trappe 13 présente sensiblement la forme d'un rectangle dont un côté est arrondi de sorte à épouser localement la forme circulaire du bord de la paroi transversale 6. La hauteur de la trappe 13, de son côté arrondi à son côté opposé, est de l'ordre d'un demi rayon de la paroi transversale 6, et la distance entre les deux autres côtés de la trappe 13 est voisine du double de la hauteur.

Un panneau 17 d'obturation de la trappe 13 est prévu, de sorte que l'on puisse choisir de décharger les déchets ou non. Par exemple, il peut être prévu de maintenir la trappe 13 fermée pendant la nuit, et de l'ouvrir dans la journée.

Le panneau 17 est monté mobile entre une position de fermeture, dans laquelle il obture la trappe 13, et une position d'ouverture, dans laquelle la trappe 13 est dégagée. A cet effet est prévu un dispositif 18 de déplacement du panneau 17, actionné par un moteur 19 embarqué sur le tambour 2. Le dispositif 18 peut consister en un vérin, un ensemble manchon taraudé - vis filetée, ou tout autre mécanisme approprié.

La paroi transversale 6 comprend également une pluralité d'orifices 20 de ventilation, destinés à permettre l'entrée d'air dans le tambour 2, et la circulation de cet air sensiblement parallèlement à l'axe 4, grâce à l'aspiration provoquée par le ventilateur 12.

La paroi transversale 6 présente au moins deux ensembles d'au moins un orifice de ventilation, lesdits ensembles étant répartis sur la surface de ladite paroi transversale et espacés les uns des autres sensiblement régulièrement. Au moins un ensemble comprend au moins deux orifices situés sensiblement sur un même rayon, dans la zone périphérique de la paroi transversale.

Dans la réalisation représentée, les orifices 20 sont répartis sur la surface de la paroi transversale 6 en quatre ensembles 21 de deux orifices 20 chacun, respectivement un premier ensemble 21a, un deuxième ensemble 21b, un troisième ensemble 21 c et un quatrième ensemble 21 d.

Dans un ensemble donné 21, les orifices 20 sont situés sensiblement sur un même rayon de la paroi transversale 6, dans la zone périphérique de ladite paroi 6. Un premier orifice 20a, dit extérieur, est par exemple situé à une distance du bord circulaire de la paroi transversale 6 de l'ordre de 10 à 20 cm, un deuxième orifice 20b, dit intérieur, étant situé à une distance du bord circulaire de la paroi transversale 6 de l'ordre de 30 à 40 cm. Les orifices extérieurs 20a des quatre ensembles 21 son situés sensiblement sur un même cercle centré sur l'axe 4. De même, les orifices intérieurs 20b des quatre ensembles 21 son situés sensiblement sur un même cercle, de diamètre plus petit, centré sur l'axe 4.

Les troisième et quatrième ensembles 21 c, 21 d sont situés de part et d'autre de la trappe 13, et écartés angulairement de 100° environ. L'écart angulaire entre les premier et quatrième ensembles 21 a, 21d d'une part, et entre les deuxième et troisième ensembles 21 b, 21 c d'autre part, est d'environ 95°.

Les orifices 20 présentent sensiblement la même forme. Ils sont rectangulaires, de hauteur (selon un rayon) de l'ordre de 5 à 15 cm, et de largeur de l'ordre de 25 à 40 cm. Les deux orifices 20a, 20b d'un même ensemble sont espacés radialement d'une distance de l'ordre de 10 cm.

Un dispositif d'obturation 23 est prévu, pour chaque ensemble 21, pour permettre l'ouverture et la fermeture contrôlées des orifices 20.

Chaque dispositif d'obturation 23 comprend tout d'abord une tige 24 disposée à l'extérieur du tambour 2, en regard, sensiblement parallèlement et à proximité immédiate de la paroi transversale 6, ladite tige 24 s'étendent sensiblement radialement. A l'extrémité extérieure de la tige 24, située au-delà du bord circulaire de la paroi transversale 6, est fixé un galet 25 d'axe sensiblement parallèle à l'axe 4 du tambour 2. En outre, la tige 24 est guidée en translation radiale par des manchons de coulissement 26, 27 situés respectivement à la partie extrême intérieure et à la partie extrême extérieure de la tige 24.

La tige 24 porte deux volets 28a, 28b disposés sensiblement parallèlement à la paroi transversale 6, et à proximité immédiate de celle-ci. La position des volets sur la tige 24, leur forme et leurs dimensions sont prévues pour permettre d'une part l'obturation des orifices 20, et d'autre part le dégagement de ces orifices 20.

Par exemple, les volets 28a, 28b présentent une forme rectangulaire sensiblement identique à la forme des orifices 20, mais de dimensions légèrement plus grandes, de sorte à bien recouvrir les orifices 20 pour assurer leur obturation. De plus, l'écartement entre les deux volets 28a, 28b est adapté à l'écartement entre les deux orifices 20a, 20b d'un même ensemble 21.

Un ressort 29, logé dans le manchon 27, exerce une force radiale orientée vers l'extérieur du tambour 2, tendant à maintenir la tige 24 et les volets 28a, 28b associés dans une position d'obturation des orifices 20.

L'installation 1 comporte en outre une charpente 30 dont une partie s'étend au-dessus du tambour 2 et soutient une rampe 31.

La rampe 31 présente la forme d'un arc de cercle, placé à l'extérieur de l'enveloppe 3, de façon sensiblement concentrique. La rampe 31 est disposée de sorte à s'étendre en vis à vis de la surface libre 22 au moins d'une extrémité longitudinale à l'autre de cette surface libre 22. Par exemple, la rampe 31 s'étend sur environ 130°, entre une première extrémité 32 située en amont de la verticale, à un angle α1 d'environ 20°, et une deuxième extrémité 33 située en aval de la verticale, à un angle α2 d'environ 110°, par rapport au sens de rotation R du tambour 2. Dans cette configuration la surface libre 22 forme sensiblement une corde de la rampe 31.

La rampe 31 comporte une zone centrale 34, dont la face en regard du tambour 2 est sensiblement circulaire, ainsi qu'une zone d'entrée 35 et une zone de sortie 36 dont les faces en regard du tambour 2 sont inclinées de manière que les extrémités 32, 33 de la rampe 31 soient situées à une distance radiale du tambour 2 plus importante que la zone centrale 34.

Lors de la rotation du tambour 2, le galet 25 d'un dispositif d'obturation 23 vient au contact de la zone d'entrée 35 de la rampe 31 et se déplace vers la zone centrale 34, provoquant de ce fait le coulissement de la tige 24 radialement, vers l'axe 4 du tambour 2, en comprimant le ressort 29.

La distance radiale entre la rampe 31 et le tambour 2 est prévue pour permettre la coopération du galet 25 avec la rampe 31, ainsi qu'un déplacement d'amplitude déterminée de la tige 24 pour que les volets 28a, 28b se déplacent vers l'axe 4, dégageant ainsi les orifices 20a, 20b. Le déplacement de la tige 24 est tel que, notamment, le volet extérieur 28a se situe alors entre les orifices extérieur 20a et intérieur 20b, de sorte que ledit volet a dégagé l'orifice extérieur 20a sans obturer l'orifice intérieur 20b.

La rotation du tambour se poursuivant, le galet 25 arrive en regard de la zone de sortie 36 de la rampe 31, le ressort 29 ramenant alors progressivement la tige 24 et les volets 28a, 28b vers la périphérie de la paroi transversale 6 jusqu'à la position d'obturation des orifices 20, lorsque le galet 25 n'est plus en contact avec la rampe 31.

De ce fait, les orifices 20 sont dégagés lorsqu'ils ne sont pas en regard des déchets présents dans le tambour 2, permettant ainsi l'entrée d'air axialement par l'action du ventilateur 12, et les orifices 20 sont obturés lorsqu'ils sont en regard des déchets, de sorte à empêcher un déchargement intempestif du tambour 2.

La circulation axiale des déchets depuis le bouclier d'entrée vers le bouclier de sortie, et la circulation axiale de l'air de l'aval vers l'amont ou dans le sens inverse conduit à une activité de fermentation particulièrement performante.

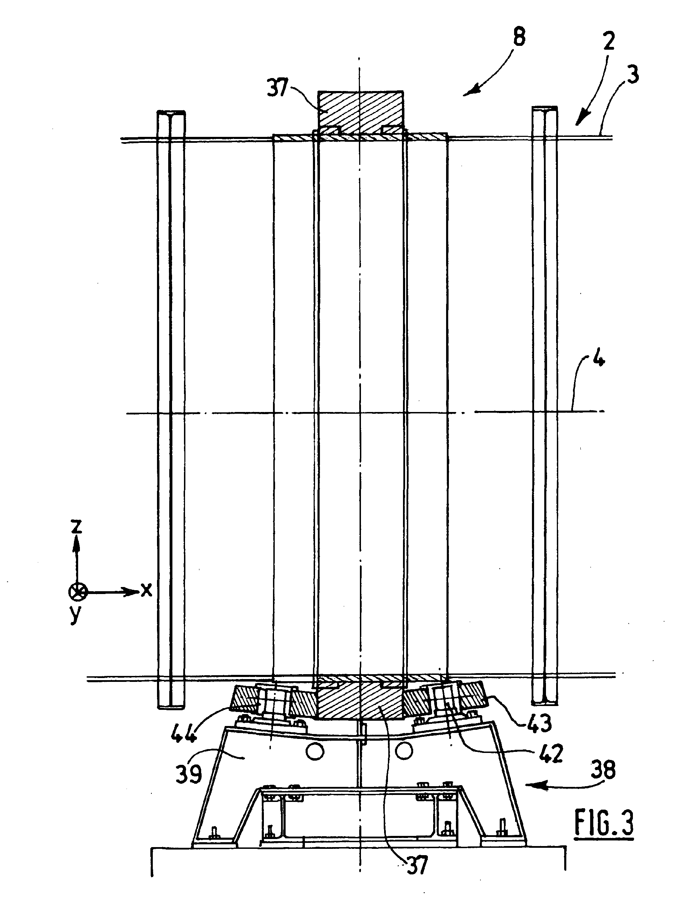

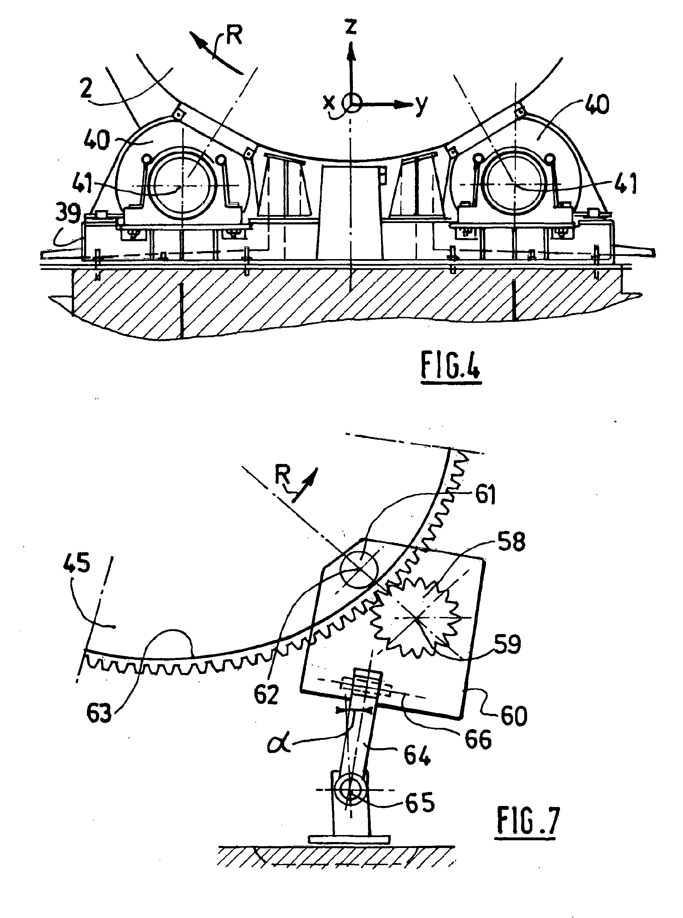

On décrit à présent le dispositif amont 8 de guidage en rotation du tambour 2, en référence aux figures 3 et 4. Il est à noter que le dispositif aval de guidage en rotation 9 peut être identique ou non.

Le dispositif amont 8 de guidage en rotation comprend tout d'abord un organe de maintien, tel qu'une ceinture 37, solidaire de l'enveloppe 3 du tambour 2.

En outre, un dispositif de support 38 du tambour 2 est fixé au sol. Le dispositif de support 38 comprend un bâti 39 auquel sont associés quatre galets 40 d'axe 41 parallèle à l'axe 4, disposés sensiblement aux coins d'un rectangle. Le tambour repose sur les galets 40 qui autorisent sa rotation autour de l'axe 4. Sur la face supérieure du bâti 39 sont fixés des organes saillants 42 associés à une pièce 43 solidaire de la ceinture 37 via des roulements 44, de sorte à permettre, localement, une certaine amplitude de rotation du tambour 2 par rapport au bâti 39 autour de l'axe Y.

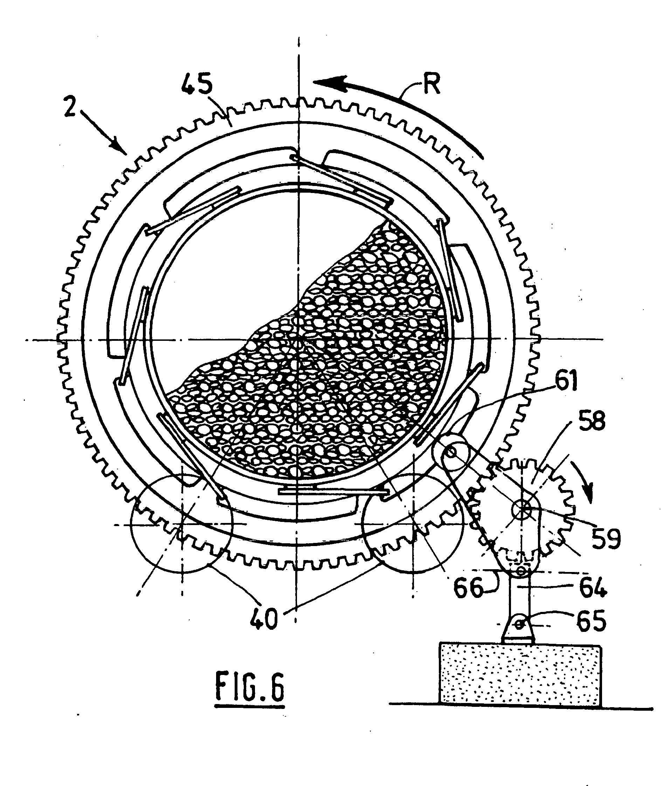

On se rapporte maintenant aux figures 5 et 6 qui illustrent le système d'entraînement 7 en rotation du tambour 2. Ce système d'entraînement 7 est décrit « au repos », c'est-à-dire en l'absence d'une dilatation du tambour 2.

Le système d'entraînement 7 comprend un organe d'entraînement tel qu'une couronne dentée 45 solidaire du tambour 2, d'axe nominal sensiblement confondu avec l'axe 4. La couronne dentée 45 est apte à coopérer avec un dispositif moteur pour l'entraînement en rotation du tambour 2.

Le dispositif moteur comprend un moteur 46 d'axe sensiblement parallèle à l'axe 4, dont la rotation est transmise via une courroie 48 à un premier dispositif réducteur. La courroie 48 est située dans un plan sensiblement orthogonal à l'axe 4, la premier dispositif réducteur étant plus éloigné du tambour 2 que le moteur 46. Le moteur 46 et le premier dispositif réducteur sont montés sur un support fixé au sol.

La sortie du premier dispositif réducteur est connectée à l'entrée d'un deuxième dispositif réducteur via un dispositif de liaison. Le dispositif de liaison comprend par exemple une barre de transmission sensiblement parallèle à l'axe 4, dont l'extrémité amont est associée à la sortie du premier dispositif réducteur par un premier cardan, et dont l'extrémité aval est associée à l'entrée du deuxième dispositif réducteur par un deuxième cardan et des moyens de coulissement selon l'axe X. Les moyens de coulissement sont formés par un premier cylindre d'axe X apte à coulisser selon son axe dans un deuxième cylindre concentrique, l'ensemble étant protégé par une membrane souple de type soufflet.

Le deuxième dispositif réducteur comprend un manchon denté solidaire du deuxième cylindre, agencé pour venir en prise avec un pignon 58 d'axe principal 59 sensiblement parallèle à l'axe nominal 4 du tambour 2. Le pignon 58 est donc entraîné en rotation autour de son axe principal 59, par le moteur 46.

Le pignon 58 est situé entre le tambour 2 et le deuxième dispositif réducteur, et est disposé de sorte à venir engrener la couronne 45 pour commander la rotation du tambour 2 autour de son axe nominal 4. Le pignon 58 est en partie logé dans un carter 60 auquel sont associés en rotation deux galets 61 d'axe 62 sensiblement parallèle à l'axe X. Les galets 61 sont agencés pour maintenir la couronne dentée 45 en prise avec le pignon 58. A cet effet, ils sont disposés aux extrémités amont et aval de la couronne 45, contre une face 63 de la dite couronne 45 dirigée vers l'axe 4.

Le carter 60 est fixé au sol par l'intermédiaire d'une barre 64 sensiblement verticale dont l'extrémité inférieure est associée au sol de façon rotative autour d'un premier axe de flottement 65, sensiblement parallèle à l'axe X, et dont l'extrémité supérieure est associée au carter 60 de façon rotative autour d'un deuxième axe de flottement 66 sensiblement parallèle à l'axe Y. Le deuxième axe de flottement 66 est situé sensiblement dans un plan (Y, Z) médian de la couronne 45. En outre, la longueur de la barre 64 est choisie, en fonction du support du moteur 46 et du premier dispositif réducteur, pour que la barre de transmission soit sensiblement horizontale.

Lorsque le tambour se dilate, du fait de l'augmentation de température provoquée par la fermentation des déchets, le pignon 58 est apte à « suivre » la déformation du tambour 2, au niveau de la couronne dentée 45, grâce aux axes de flottement 65, 66, de sorte que les dents du pignon 58 et de la couronne 45 restent toujours en prise. Ce déplacement du pignon 58 est « libre », c'est-à-dire provoqué par le déplacement de la couronne 45, par opposition à la rotation du pignon 58 autour de son axe principal 59, qui est motorisée.

Dans la réalisation représentée, le pignon 58 est monté mobile en rotation autour des axes de flottement 65, 66. En variante, le pignon 58 pourrait être monté sur des patins élastomères aptes à autoriser une telle rotation.

La figure 7 illustre de façon schématique la déformation radiale du tambour 2, conduisant à l'augmentation du diamètre de la couronne 45. En conséquence, le pignon 58, maintenu contre la couronne 45 par le galet 61, se déplace en rotation autour de l'axe 65, d'un angle α. Ainsi, malgré la dilatation radiale du tambour 2, le pignon 58 reste en prise avec la couronne 45.

Le tambour 2 est également susceptible de se dilater axialement. Le tambour 2 étant maintenu à ses parties extrêmes par les dispositifs de guidage en rotation 8, 9, l'allongement axial du tambour 2 conduit à une déformation de type fléchissement, l'axe 4 n'étant alors plus parallèle à l'axe X, notamment dans la zone du système d'entraînement 7.

Les dents de la couronne 45 et du pignon 58 ne sont alors plus parfaitement alignées, le parallélisme entre l'axe principal 59 du pignon 58 et l'axe 4 pouvant être localement rétabli par la rotation du pignon 58 autour du deuxième axe de flottement 66.

Les cardans permettent d'assurer la transmission du moteur 46 au pignon 58 même lorsque les axes du moteur et du pignon ne sont pas parfaitement alignés du fait de la dilatation du tambour 2. De plus, le dispositif de liaison, comprenant les cardans ainsi que les moyens de coulissement, est agencé pour permettre la rotation du pignon 58 autour du premier et/ou du deuxième axe de flottement 65,66.

La force tangentielle existant au point de contact entre la couronne 45 et le pignon 58 forme, avec la force de réaction de la barre 64, un couple de rappel qui tend à plaquer les dents l'une contre l'autre.

Le système d'entraînement est donc apte à compenser les défauts d'alignement des axes 4, 59 lors de la mise en place, ou suite à la dilatation du tambour.

L'amplitude du déplacement en rotation du pignon 58 autour du premier et/ou du deuxième axe de flottement 65, 66 est inférieure à 10° de part et d'autre de la position de repos.

Il est à noter que le dispositif de ventilation pourrait être différent. En particulier, les orifices de ventilation pourraient être disposés différemment, sur la paroi transversale du bouclier de sortie ou sur l'enveloppe du tambour. Néanmoins, le système d'entraînement tel que décrit est particulièrement bien adapté aux tambours dont le dispositif de ventilation est très efficace, comme celui décrit ici, car il peut accommoder les importantes déformations du tambour qui résultent de l'augmentation de la performance de la fermentation.

## Revendications

1. Installation pour la fermentation aérobie de déchets, comprenant :
- un tambour (2) comportant :
- une enveloppe (3) dans laquelle les déchets à traiter sont destinés à être introduits, ladite enveloppe présentant un axe nominal (4) sensiblement horizontal ou légèrement incliné par rapport à l'horizontale, une extrémité amont et une extrémité aval ;
- un bouclier de sortie comprenant une paroi transversale (6) disposée en regard de l'extrémité aval de l'enveloppe (3) ;
- un dispositif de ventilation permettant la circulation d'air à l'intérieur du tambour (2) ;
- au moins un système d'entraînement (7), comportant un pignon (58) entraîné en rotation autour d'un axe principal (59) sensiblement parallèle à l'axe nominal (4) du tambour (2) et une couronne dentée (45) solidaire du tambour (2), ledit pignon (58) étant disposé de sorte à venir engrener la couronne (45) pour commander la rotation du tambour (2) autour de son axe nominal (4) ;
**caractérisée en ce que** le pignon (58) est en outre monté mobile par rapport à un premier axe de flottement (65) distinct de l'axe principal (59) du pignon (58), ledit montage étant agencé pour permettre au moins la rotation libre du pignon autour dudit premier axe de flottement.

2. Installation selon la revendication 1, **caractérisée en ce que** le pignon (58) est en outre monté mobile par rapport à un deuxième axe de flottement (65) distinct de l'axe principal (59) du pignon (58) et du premier axe de flottement (65), ledit montage étant agencé pour permettre au moins la rotation libre du pignon autour dudit deuxième axe de flottement.

3. Installation selon la revendication 1 ou 2, **caractérisée en ce qu'**au moins un axe de flottement (65, 66) est sensiblement parallèle à l'axe principal (59) du pignon (58).

4. Installation selon la revendication 1 ou 2, **caractérisée en ce qu'**au moins un axe de flottement (65, 66) est sensiblement orthogonal à l'axe principal (59) du pignon (58).

5. Installation selon l'une quelconque des revendications 2 à 4, **caractérisée en ce que** le premier axe (65) est sensiblement parallèle à l'axe principal (59) du pignon (58) et **en ce que** le deuxième axe (66) est sensiblement horizontal et orthogonal à l'axe principal (59) du pignon (58).

6. Installation selon l'une quelconque des revendications 1 à 5, **caractérisée en ce que** l'amplitude du déplacement en rotation du pignon (58) autour du premier et/ou du deuxième axe de flottement (65, 66) est inférieure à 10° de part et d'autre de la position de repos.

7. Installation selon l'une quelconque des revendications 1 à 6, **caractérisée en ce que** le système d'entraînement (7) en rotation du tambour comprend un moteur (46) associé au pignon (58) via un dispositif réducteur et un dispositif de liaison, ledit dispositif de liaison étant agencé pour permettre la rotation du pignon (58) autour du premier et/ou du deuxième axe de flottement (65, 66).

8. Installation selon la revendication 7, **caractérisée en ce que** le dispositif de liaison comprend au moins un cardan et des moyens agencés pour permettre un coulissement du pignon (58) sensiblement parallèlement à l'axe principal (59) du pignon (58).

9. Installation selon l'une quelconque des revendications 5 à 8, **caractérisée en ce que** le pignon (58) est logé dans un carter (60) fixé au sol par l'intermédiaire d'une barre (64) sensiblement verticale dont l'extrémité inférieure est associée au sol de façon rotative autour du premier axe de flottement (65), et dont l'extrémité supérieure est associée au carter (60) de façon rotative autour du deuxième axe de flottement (66).

10. Installation selon l'une quelconque des revendications 1 à 9, **caractérisée en ce que** le système d'entraînement (7) en rotation comprend un galet (61) associé au pignon (58) et disposé de sorte que la couronne (45) soit intercalée entre ledit galet (61) et le pignon (58).

11. Installation selon l'une quelconque des revendications 1 à 10, **caractérisée en ce qu'**elle comprend au moins un dispositif de guidage (8, 9) en rotation du tambour (2), ledit dispositif comprenant au moins un dispositif de support (38) du tambour et au moins un organe de maintien (37) prévu sur le tambour pour coopérer avec ledit dispositif de support.

12. Installation selon l'une quelconque des revendications 1 à 11, **caractérisée en ce que** la paroi transversale (6) comprend une trappe (13) apte à permettre l'évacuation des déchets fermentés et au moins un orifice de ventilation (20, 20a, 20b) distinct de la trappe (13), ledit orifice étant disposé de sorte à permettre une circulation axiale d'air à travers lui, entre l'intérieur et l'extérieur de l'enveloppe (3).

13. Installation selon la revendication 12, **caractérisée en ce qu'**elle comprend un dispositif d'obturation (23) de l'orifice de ventilation (20), ledit dispositif étant agencé pour pouvoir être déplacé entre une position de fermeture, dans laquelle l'orifice de ventilation est obturé, et une position d'ouverture, dans laquelle l'orifice de ventilation est dégagé, ledit dispositif étant maintenu dans sa position de fermeture par des moyens de rappel (29) et apte à être déplacé vers sa position d'ouverture sous l'action d'une force d'appui exercée à l'encontre de la force des moyens de rappel.

14. Installation selon la revendication 12 ou 13, **caractérisée en ce que** le dispositif de ventilation comprend au moins un ventilateur (12) relié à l'extrémité amont de l'enveloppe (3) du tambour (2), ledit ventilateur étant agencé pour aspirer et/ou refouler l'air, de sorte que l'air soit introduit, respectivement évacué, au niveau de l'extrémité aval de l'enveloppe de façon sensiblement axiale à travers l'orifice de ventilation.

## Patentansprüche

1. Anlage zur aeroben Fermentierung von Abfällen, umfassend:
- eine Trommel (2), umfassend:
- eine Hülle (3), in die die zu behandelnden Abfälle eingeführt werden sollen, wobei die Hülle eine im Wesentlichen horizontale oder leicht zur Horizontalen geneigte Nominalachse (4), ein stromaufwärtiges Ende und ein stromabwärtiges Ende aufweist;
- ein Ausgangsschild, umfassend eine Querwand (6), die gegenüber dem stromabwärtigen Ende der Hülle (3) angeordnet ist;
- eine Belüftungsvorrichtung, die die Luftzirkulation innerhalb der Trommel (2) ermöglicht;
- mindestens ein Antriebssystem (7), umfassend ein Ritzel (58), das in Drehung um eine Hauptachse (59) im Wesentlichen parallel zur Nominalachse (4) der Trommel (2) angetrieben wird, und einen Zahnkranz (45), der mit der Trommel (2) verbunden ist, wobei das Ritzel (58) derart angeordnet ist, dass es in den Zahnkranz (45) eingreift, um die Drehung der Trommel (2) um ihre Nominalachse (4) zu steuern;
**dadurch gekennzeichnet, dass** das Ritzel (58) ferner beweglich in Bezug zu einer ersten Schwimmachse (65), die von der Hauptachse (59) des Ritzels (58) getrennt ist, montiert ist, wobei die Montage derart vorgesehen ist, dass sie zumindest die freie Drehung des Ritzels um die erste Schwimmachse ermöglicht.

2. Anlage nach Anspruch 1, **dadurch gekennzeichnet, dass** das Ritzel (58) ferner in Bezug zu einer zweiten Schwimmachse (65), die von der Hauptachse (59) des Ritzels (58) und von der ersten Schwimmachse (65) getrennt ist, beweglich montiert ist, wobei die Montage derart vorgesehen ist, dass sie zumindest die freie Drehung des Ritzels um die zweite Schwimmachse ermöglicht.

3. Anlage nach Anspruch 1 oder 2, **dadurch gekennzeichnet, dass** mindestens eine Schwimmachse (65, 66) im Wesentlichen parallel zur Hauptachse (59) des Ritzels (58) ist.

4. Anlage nach Anspruch 1 oder 2, **dadurch gekennzeichnet, dass** mindestens eine Schwimmachse (65, 66) im Wesentlichen orthogonal zur Hauptachse (59) des Ritzels (58) ist.

5. Anlage nach einem der Ansprüche 2 bis 4, **dadurch gekennzeichnet, dass** die erste Achse (65) im Wesentlichen parallel zur Hauptachse (59) des Ritzels (58) ist, und dass die zweite Achse (66) im Wesentlichen horizontal und orthogonal zur Hauptachse (59) des Ritzels (58) ist.

6. Anlage nach einem der Ansprüche 1 bis 5, **dadurch gekennzeichnet, dass** die Amplitude der Drehbewegung des Ritzels (58) um die erste und/oder die zweite Schwimmachse (65, 66) kleiner als 10° beiderseits der Ruhestellung ist.

7. Anlage nach einem der Ansprüche 1 bis 6, **dadurch gekennzeichnet, dass** das Drehantriebssystem (7) der Trommel einen Motor (46) umfasst, der mit Ritzel (58) über eine Untersetzungsvorrichtung und eine Verbindungsvorrichtung verbunden ist, wobei die Verbindungsvorrichtung derart angeordnet ist, um die Drehung des Ritzels (58) um die erste und/oder die zweite Schwimmachse (65, 66) zu ermöglichen.

8. Anlage nach Anspruch 7, **dadurch gekennzeichnet, dass** die Verbindungsvorrichtung mindestens ein Kardangelenk und Mittel umfasst, die derart angeordnet sind, dass sie ein Gleiten des Ritzels (58) im Wesentlichen parallel zur Hauptachse (59) des Ritzels (58) ermöglichen.

9. Anlage nach einem der Ansprüche 5 bis 8, **dadurch gekennzeichnet, dass** das Ritzel (58) in einem Gehäuse (60) angeordnet ist, das am Boden mit Hilfe einer im Wesentlichen vertikalen Stange (64) befestigt ist, deren unteres Ende mit dem Boden drehbar um die erste Schwimmachse (65) verbunden ist, und deren oberes Ende mit dem Gehäuse (60) drehbar um die zweite Schwimmachse (66) verbunden ist.

10. Anlage nach einem der Ansprüche 1 bis 9, **dadurch gekennzeichnet, dass** das Drehantriebssystem (7) eine Rolle (61) umfasst, die mit dem Ritzel (58) verbunden und derart angeordnet ist, dass der Zahnkranz (45) zwischen der Rolle (61) und dem Ritzel (58) angeordnet ist.

11. Anlage nach einem der Ansprüche 1 bis 10, **dadurch gekennzeichnet, dass** sie mindestens eine Drehführungsvorrichtung (8, 9) für die Trommel (2) umfasst, wobei die Vorrichtung mindestens eine Stützvorrichtung (38) für die Trommel und mindestens ein Halteelement (37) umfasst, das auf der Trommel vorgesehen ist, um mit der Stützvorrichtung zusammenzuwirken.

12. Anlage nach einem der Ansprüche 1 bis 11, **dadurch gekennzeichnet, dass** die Querwand (6) eine Klappe (13) umfasst, die geeignet ist, die Ableitung der fermentierten Abfälle zu ermöglichen, und zumindest eine Belüftungsöffnung (20, 20a, 20b), die von der Klappe (13) getrennt ist, wobei die Öffnung derart angeordnet ist, dass sie eine axiale Luftzirkulation durch sie zwischen dem Innen- und dem Außenbereich der Hülle (3) ermöglicht.

13. Anlage nach Anspruch 12, **dadurch gekennzeichnet, dass** sie eine Verschlussvorrichtung (23) für die Belüftungsöffnung (20) umfasst, wobei die Vorrichtung derart angeordnet ist, dass sie zwischen einer Verschlussposition, in der die Belüftungsöffnung verschlossen ist, und einer Öffnungsposition, in der die Belüftungsöffnung freigegeben ist, verschoben werden kann, wobei die Vorrichtung in ihrer Verschlussposition durch Rückstellmittel (29) gehalten wird und geeignet ist, in ihre Öffnungsposition unter der Wirkung einer Schubkraft, die gegen die Kraft der Rückstellmittel ausgeübt wird, verschoben zu werden.

14. Anlage nach Anspruch 12 oder 13, **dadurch gekennzeichnet, dass** die Belüftungsvorrichtung mindestens einen Ventilator (12) umfasst, der mit dem stromaufwärtigen Ende der Hülle (3) der Trommel (2) verbunden ist, wobei der Ventilator derart angeordnet ist, dass er die Luft ansaugt und/oder ausstößt, so dass die Luft in den Bereich des stromabwärtigen Endes der Hülle im Wesentlichen axial durch die Belüftungsöffnung eingeleitet bzw. aus diesem abgesaugt wird.

## Claims

1. Installation for aerobic fermentation of waste, comprising:
- a drum (2) comprising:
- an envelope (3) into which the waste to be treated is to be introduced, said envelope having a nominal axis (4) which is substantially horizontal or slightly inclined with respect to the horizontal, an upstream end and a downstream end;
- an exit shield comprising a transverse wall (6) arranged facing the downstream end of the envelope (3);
- a ventilation device allowing air to circulate inside the drum (2);
- at least one drive system (7) comprising a gearwheel (58), driven in rotation about a main axis (59) which is substantially parallel to the nominal axis (4) of the drum (2), and an annular gear (45) secured to the drum (2), wherein said gearwheel (58) is arranged to as to mesh with the annular gear (45) in order to control the rotation of the drum (2) about its nominal axis (4) ;
**characterized in that** the gearwheel (58) is moreover mounted so as to be able to move with respect to a first floating axis (65) which is separate from the main axis (59) of the gearwheel (58), said mounting being arranged so as to at least allow the gearwheel to rotate freely about said first floating axis.

2. Installation according to Claim 1, **characterized in that** the gearwheel (58) is moreover mounted so as to be able to move with respect to a second floating axis (65) which is separate from the main axis (59) of the gearwheel (58) and from the first floating axis (65), said mounting being arranged so as to at least allow the gearwheel to rotate freely about said second floating axis.

3. Installation according to Claim 1 or 2, **characterized in that** at least one floating axis (65, 66) is substantially parallel to the main axis (59) of the gearwheel (58).

4. Installation according to Claim 1 or 2, **characterized in that** at least one floating axis (65, 66) is substantially perpendicular to the main axis (59) of the gearwheel (58).

5. Installation according to any one of Claims 2 to 4, **characterized in that** the first axis (65) is substantially parallel to the main axis (59) of the gearwheel (58) and **in that** the second axis (66) is substantially horizontal and perpendicular to the main axis (59) of the gearwheel (58).

6. Installation according to any one of Claims 1 to 5, **characterized in that** the amplitude of the rotation of the gearwheel (58) about the first and/or second floating axis (65, 66) is less than 10° either side of the neutral position.

7. Installation according to any one of Claims 1 to 6, **characterized in that** the system (7) for driving the drum in rotation comprises a motor (46) associated with the gearwheel (58) via a reduction device and a connecting device, wherein said connecting device is arranged so as to allow the gearwheel (58) to rotate about the first and/or the second floating axis (65, 66).

8. Installation according to Claim 7, **characterized in that** the connecting device comprises at least one cardan joint and means arranged so as to allow the gearwheel (58) to slide substantially parallel to the main axis (59) of the gearwheel (58).

9. Installation according to any one of Claims 5 to 8, **characterized in that** the gearwheel (58) is housed in a casing (60) attached to the ground by way of a substantially vertical bar (64) the lower end of which is connected to the ground so as to be able to rotate about the first floating axis (65) and the upper end of which is connected to the casing (60) so as to be able to rotate about the second floating axis (66).

10. Installation according to any one of Claims 1 to 9, **characterized in that** the system (7) for driving in rotation comprises a roller (61) connected to the gearwheel (58) and arranged such that the annular gear (45) is interposed between said roller (61) and the gearwheel (58).

11. Installation according to any one of Claims 1 to 10, **characterized in that** it comprises at least one device (8, 9) for guiding the drum (2) in rotation, said device comprising at least one device (38) for supporting the drum and at least one holding member (37) provided on the drum in order to engage with said support device.

12. Installation according to any one of Claims 1 to 11, **characterized in that** the transverse wall (6) comprises a hatch (13) designed to allow the fermented waste to be removed, and at least one ventilation opening (20, 20a, 20b) which is separate from the hatch (13), said opening being arranged so as to allow air to circulate axially through it between the inside and the outside of the envelope (3).

13. Installation according to Claim 12, **characterized in that** it comprises a device (23) for blocking off the ventilation opening (20), wherein said device is arranged such that it can be moved between a closed position, in which the ventilation opening is blocked off, and an open position, in which the ventilation opening is not obstructed, said device being held in its closed position by return means (29) and designed to be moved into its open position when acted upon by a pressing force exerted counter to the force of the return means.

14. Installation according to Claim 12 or 13, **characterized in that** the ventilation device comprises at least one fan (12) connected to the upstream end of the envelope (3) of the drum (2), said fan being arranged so as to suck in and/or pump out air such that the air is introduced or, as the case may be, evacuated substantially axially at the downstream end of the envelope, through the ventilation orifice.
